(19) Europäisches Patentamt
European Patent Office
Office européen des brevets

(11) **EP 2 810 977 A1**

(12) **EUROPEAN PATENT APPLICATION**

(43) Date of publication:
**10.12.2014 Bulletin 2014/50**

(51) Int Cl.:
***C08J 3/22*** *(2006.01)*

(21) Application number: **13171074.1**

(22) Date of filing: **07.06.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Bayer MaterialScience AG**
**51373 Leverkusen (DE)**

(72) Inventors:
• **Hocke, Heiko**
**51375 Leverkusen (DE)**
• **Vitovsky, John**
**Seabrook 77586-0000, Texas (US)**

(74) Representative: **BIP Patents**
**c/o Bayer Intellectual Property GmbH**
**Creative Campus Monheim**
**Alfred-Nobel-Straße 10**
**40789 Monheim (DE)**

(54) **Composition and process for the preparation of polymer-CNT composites**

(57) The present disclosure relates to a process for the preparation of a composition containing carbon nanotubes (CNTs) and a low viscosity carrier in an extrusion system, comprising the steps of: a) adding a low viscosity carrier with a melt viscosity below 30 Pas to the extrusion system; b) adding CNTs with an average agglomerate size in the range from 0.02 mm to 6 mm to the extrusion system; c) conveying the CNTs and the low viscosity carrier and the thermoplastic polymer or reactive resin through the extrusion system for a time of from 10 s to 90 s, whereby the components are compounded; and d) collecting the composition of low viscosity carrier and CNTs from the extrusion system, wherein the low viscosity carrier comprises less than 1 wt.-% of aromatic compounds. The present disclosure further relates to a composition containing CNTs, a low viscosity carrier and optionally a thermoplastic polymer, which was prepared according to any of the aforementioned preparation processes and the use of this composition for the preparation of a polymer-CNT composite material.

EP 2 810 977 A1

**Description**

FIELD OF THE DISCLOSURE

The present disclosure relates to a process for the preparation of a composition comprising carbon nanotubes (CNTs) and a low viscosity carrier in an extrusion system. The composition produced by the process may be used in the preparation of polymer-CNT composites.

TECHNICAL BACKGROUND

Carbon nanotubes (CNTs) are known for their exceptional properties. For example, the strength is approximately 100 times that of steel, the thermal conductivity is comparable to that of diamond, their thermal stability reaches up to 2800 °C under reduced pressure and the electrical conductivity can be a multiple of the conductivity of copper. These principle molecular and structural characteristics, however, are often only fully exploitable in a composite material comprising CNTs if it is possible to finely disperse the CNTs in the matrix. A dispersion, the finer the better, ensures abundant contact between the CNTs and the medium, leading to best possible exploitation of the CNTs' exceptional molecular and structural characteristics in the composite material. In order to obtain fine and stable dispersions, the CNTs must be compatible with the polymer material or have to be compatibilized by way of additives or modification of the CNTs.
In terms of electrical conductivity, it is also advantageous to form a highly connected network CNTs in the composite material. The formation of such a network is reflected by the sharp increase in the electrical conductivity as a function of the concentration of carbon nanotubes (percolation). For the formation of a network, the CNTs should be individualized, i.e. dispersed, as much as possible, essentially free of agglomerates, not aligned and present at around the minimal concentration at which such a network can form.
This emerged, for example, from studies with reactive resins, in particular epoxies, where larger CNT agglomerates led to breaking points and deteriorated mechanical properties of such composite materials (cf. Zhou, Express Polym. Lett. 2008, 2, 1, 40-48). For industrial applications, therefore, the incorporation of CNTs into a polymer matrix is still challenging. The observed difficulties in dispersing CNTs in polymer matrices are possibly due to the hydrophobic character of the carbon nanotube surface, mechanical interlocking of the fibers in agglomerates or later by diffusion processes and the high aspect ratio of the quasi one-dimensional structure. In order to obtain a product with the desired mechanical and conductive properties, CNT agglomerates have to be broken up and - often - the tendency of carbon nanotubes to reaggregate has to be suppressed.
US 2009/0023851 A1 describes a process for the production of electrically conducting CNT-polymer-composite materials. In this process the CNTs are dispersed in a polymer melt using a twin shaft screw extruder to form a mixture and the mixture is then extruded. For a reduction of the CNT agglomerates it is suggested to add the CNT agglomerates to the solid polymer granulate before the melting zone of the extruder. The additional friction provided by the polymer granulate and a high energy input are described to reduce the number and size of the CNT agglomerates and to improve the distribution of CNTs in the polymer.
WO 2012/031989 A1 describes a further process for the production of polymer-CNT-composite materials with an improved dispersion of the CNTs. In this process the CNT agglomerates with an average agglomerate size in the range from 0.02 mm to 6 mm are contacted with an impregnation material and then incorporated into the thermoplastic polymer or reactive resin. Due to the impregnation material, the CNT agglomerates disrupt upon incorporation into the polymer melt, thus obviating the need for a predispersion or a high energy input for reducing the agglomerates.
US 7,285,591 B2 describes processes for preparing polymer-CNT composite materials and fibers that are suggested to provide improved nanotube alignment and dispersion. In the process, the CNTs are dispersed in a liquid that has a low vapor pressure and may contain organic solvents such as DMF, toluene or trichlorobenzene. The CNT dispersion is contacted and mixed with a polymer melt and the liquid is vaporized. However, due to the high energy required for evaporating the solvent the polymer melt is cooled significantly and a scale up to an industrial process is difficult or even impossible.
WO 2008/106572 A1 relates to a polymer composition comprising a resin matrix containing a mixture of a resin, in particular cyclic butylene terephthalate, CNTs, and a polymer matrix. Both the resin matrix and the polymer composition are in particular formed by melt mixing of the components. Disadvantageous in the process according to WO 2008/106572 A1 are in particular the long mixing times and the required use of a cyclic aromatic carbon compound. Concerns related to health and safety issues regarding the use of aromatic compounds, e.g. phthalic acid derivatives, started a replacement to less toxic suspect materials (Annu. Rev. Public Health 2010; 31:179-94).
WO 2009/001324 A9 relates to nanotubes of at least one chemical element chosen from elements of groups IIIa, IVa and Va, in particular CNTs, to improve the mechanical properties of a polymeric matrix comprising at least one semi-crystalline thermoplastic polymer. The CNTs may be optionally dispersed as a solution in a solvent. The polymer and the CNTs are preferably mixed by compounding using a twin screw extruder. Additionally in this process, long extrusion times are needed and a high energy entry in case of solvent removal, which are disadvantages of the described process.

SUMMARY OF THE DISCLOSURE

In light of the state of the art, the problem underlying the invention is the provision of a further process or means for the manufacture of a polymer-CNT composite material, whereby a sufficiently fine dispersion of the CNTs is achieved resulting in a high quality end product.

Furthermore, the use of non toxic and bio-based, renewable materials is strongly desirable for a sustainable business and economy.

According to the present disclosure this problem is solved by a process for the preparation of a composition containing carbon nanotubes (CNTs) and a low viscosity carrier in an extrusion system, comprising the steps of:

a) adding a low viscosity carrier with a melt viscosity below 30 Pas, preferably below 10 Pas, and in particular below 1 Pas at extrusion conditions, to an extrusion system;

b) adding CNTs with an average agglomerate size in the range from 0.02 mm to 6 mm to the extrusion system;

c) conveying the CNTs and the low viscosity carrier through the extrusion system for an average time of from 20 s to 90 s, whereby the components are compounded; and

d) collecting the composition of low viscosity carrier and CNTs from the extrusion system,

wherein the low viscosity carrier comprises less than 10 wt.-% of aromatic compounds.

Steps a) and b) are preferably performed at the same time and/or before feeding the components to the extruder. The low viscosity carrier comprises less than 10 wt.-% of aromatic compounds, so that the compositions obtainable by the process according to the present disclosure have good sustainability. Preferably, the sustainability may be improved by using a low viscosity carrier that comprises less than 1 wt.-%, more preferably less than 0.1 wt.-%, in particular less than 0.01 wt.-%, particularly preferred less than 0.001 wt.-%. The low viscosity carrier therefore preferably contains only non-aromatic compounds with aromatic compounds on a low impurity level at maximum. Preferably, the low viscosity carrier does not contain aromatic compounds. An aromatic compound is a compound containing at least one cyclic aromatic group.

The viscosity of the extrudate itself (mixture of CNT and low viscosity carrier) must be more than 100 Pas during most of the extrusion time at extrusion conditions in order to allow a proper mixing in the extrusion process. Additionally, the energy input is more than 0.25 kWh/kg, preferably more than 0.30 kWh/kg and especially more than 0.40 kWh/kg extrudate. Due to the short extrusion time the damage to the CNT (fiber shortening) and to the carrier (degradation by thermal or mechanical influence) is minimized. Besides, the economy of the extrusion process is strongly improved by short extrusion times.

The composition comprising low viscosity carrier and CNTs according to the present disclosure is also referred to as "carrier masterbatch".

A further aspect of the present disclosure is a composition containing carbon nanotubes (CNTs), a low viscosity carrier and optionally a thermoplastic polymer and/or reactive resin, which was prepared according to the aforementioned preparation process or is obtainable thereby. The low viscosity carrier contains less than 1 wt.-%, preferably less than 0.1 wt.-%, more preferably less than 0.01 wt.-%, in particular less than 0.001 wt.%, of aromatic compounds, i.e. the low viscosity carrier preferably contains only non-aromatic compounds with aromatic compounds at a low impurity level at maximum. Furthermore, the present disclosure relates to the use of the composition disclosed herein for the preparation of a polymer-CNT composite material.

Finally, the problem underlying the invention is solved by a process for the preparation of a polymer-CNT composite material in an extrusion system, comprising the steps of:

a) adding a thermoplastic polymer and/or a reactive resin to an extrusion system;

b) adding the aforementioned composition to the extrusion system and contacting the composition with the thermoplastic polymer and/or the reactive resin; and

c) conveying and compounding the components in the extrusion system; and

d) collecting the composite material containing the thermoplastic polymer and/or the reactive resin, the low viscosity carrier and the CNTs.

With the process for the preparation of a composition containing carbon nanotubes and a low viscosity carrier in an extrusion system according to the present disclosure an intermediate product, i.e. a carrier masterbatch containing a low viscosity carrier and optionally a thermoplastic polymer and/or reactive resin and CNTs can be generated, with which the dispersion of CNT in the end product, namely the polymer-CNT composite material can be significantly improved. Moreover, incorporated into the low viscosity carrier and, optionally, the thermoplastic polymer and/or reactive resin, the CNTs become easier to handle and essentially dust-free. Surprisingly, with the process according to the present disclosure much higher filling ratios of CNT with the low viscosity material can be achieved in comparison to the approach of just adding an impregnation material to the CNTs prior to extrusion. The filling ratio designates the proportion of carbon nanotubes in the composition in weight percent. Moreover, with the composition containing a low viscosity material it was surprisingly found that very short extrusion times of from 20 s to 90 s, or even of from 20 s to 60 s, in particular of from 20 s to 45 s, are sufficient for generating high filling ratios of CNTs with low viscosity material. These short extrusion times make the process much more efficient.

DETAILED DESCRIPTION

Both single-wall CNTs (SWNTs) as well as multi-wall CNTs (MWNTs) can be used in the process according to the present disclosure. With respect to their wall architecture, CNTs that can be employed in the process disclosed herein may for example be of the cylinder-type, the scroll-type, the multi-scroll-type, the cup-stacked or herringbone type, the bamboo type, the platelet type and the onion-like structure.

If cylinder type CNTs are used, each CNT may comprise only one cylinder (cylindrical SWNTs) or a plurality of cylinders (cylindrical MWNTs) stacked one into the other (for example described in U.S. 5,747,161, WO 86/03 455).

CNTs of the scroll-type are also known to the person skilled in the art. They consist of only one continuous or discontinuous graphene layer and are generally MWNTs due to several windings of the layer. In contrast, multi-scroll MWNTs consist of a plurality of graphene and/or graphite sheets, which are present together in a stack and rolled up as described in DE 10 2007 0440 31 A1. The individual graphene or graphite layers in the carbon nanotubes of the multi-scroll-type go from the centre of a cross section to the outer edge without interruption. This can enable, for example, improved and faster intercalation of other materials in the tube structure, because more open edges as entry zones of intercalates are available compared to carbon nanotubes by a simple scroll structure (Carbon 1996, 34, 1301-3). CNTs with an onion-like structure are for example described in Science 1994, 263, 1744-7. CNTs of the cupstake-type consist of conical cups that are closed at one end or open at both ends (for example, in EP-A 198.558 and U.S. 7,018,601 B2). CNTs of the herringbone type, the bamboo type and the platelet type are for example described in the review article of Milne et al. (Encyclopedia of Nanoscience and Nanotechnology, 2003, Vol. X, p.1-22; ISBN 1-58883-001-2).

The process according to the present disclosure works particularly well when MWNTs are used. The preferred MWNTs can be of the cylinder-type, scroll type, multi-scroll-type, bamboo type and cup-stacked type or mixtures thereof. It is beneficial if the average amount of carbon nanotubes has a ratio of length to outer diameter of more or equal to 5, preferably more or equal to 100.

The carbon nanotubes according to the present disclosure are provided in the form of agglomerates in which they are commercially available. There are several structural types of agglomerates (see US 6294144 B1) including the bird's nest structure (BN), combed yarn structure (CY) and the open network structure (ON). Other agglomerate types are the bulked yarn type (WO PCT/EP2010/004845) or essentially parallel aligned nanotubes in the form of carpets, or forests, which are referred to as "Forest" structures (Patent US 6 232 706, US 7744793 B2).

Provided agglomerates have an average agglomerate size (average diameter) of more than 0.02 mm. The value is determined by laser diffraction spectrometry (for example using the Mastersizer MS 2000 with the dispersing unit Hydro S by Malvern). The upper limit of the agglomerate size is preferably 6 mm. More preferably, the average agglomerate size is in the range of from 0.05 mm to 2 mm, in particular in the range of from 0.1 mm to 1 mm.

According to a particular embodiment of the present disclosure, the thermoplastic polymer is selected from any of the group consisting of polyamides (PA), in particular polyamide 6 (PA6), polyamide 6.6 (PA66) and polyamide 12 (PA12), polycarbonate (PC), homopolymers and copolymers of polyoxymethylene (POM), thermoplastic polyurethanes (TPU), homopolymers and copolymers of polyolefins, ultra high molecular weight polyethylene (UHMWPE), polyethylene terephthalate (PET), polybutylene terephthalate (PBT), polyacrylate, polymethylmetacrylate (PMMA), styrene polymers (PS), high impact polystyrene (HiPS), polyacrylonitrile (PAN), polystyrenacrylnitrile (SAN), acrylonitrile styrene acrylate (ASA) polyacrylnitrilbutadienstyrene (ABS), polyvinyl chloride (PVC), liquid crystal polymers (LCP), polyether imide (PEI), polyetheretherketone (PEEK), polyaryletherketone (PAEK), polyphenylensulfide (PPS), polysulfone (PSU), polyphenylene oxide (PPO), polyphenylene ether (PPE), fluorinated polymers, in particular selected from polyvinylidenfluoride (PVDF), ethylen-tetrafluorethylene (ETFE) and fluorinated ethylene propylene (FEP), or blends, co-polymers or modifications thereof. Practical experiments have shown that the process according to the present disclosure is particularly suited for the manufacture of composite materials, wherein the thermoplastic polymer is selected from PA6, PA66, POM, PVDF, PP, PE, UHMWPE and PC.

Throughout the present disclosure, where there is mentioning of a thermoplastic polymer or low viscosity carrier, it is also possible to use instead of the thermoplastic polymer or low viscosity carrier a reactive resin, reactive resin system or reactive resin precursor. A "reactive resin" as used herein is a reaction mixture which forms a polymer by chemical reactions taking place, for example, in the extruder. Examples for reactive resins are polyurethanes as well as phenolic and epoxy resin forming systems. In one embodiment of the process according to the present disclosure, the reactive resin system is selected from epoxides, phenolic resins, unsaturated polyesters and/or amino resins. The epoxides are, in particular, those based on bisphenol A and/or bisphenol F. The polyurethanes are particularly those based on aromatic diisocyanates such as toluene-2,4-diisocyanate TDI and/or diphenylmethane diisocyanate MDI or aliphatic diisocyanates such as hexamethylene diisocyanate, HDI and/or 3-isocyanatomethyl-3 ,5,5-trimethylcyclohexyl IPDI and/or 4,4'-diisocyanatodicyclohexylmethane H12-MDI.

According to a further embodiment of the present disclosure the low viscosity carrier material is selected from or comprises at least one member of the group consisting of or based on plant, animal or synthetic fat, cooking or frying oil, grease, dripping, polyalkylethers and -esters, e.g. polyethylenglycol (PEG) or polypropylenglycol (PPG) or copolyethers, wax, e.g. of polyethylene derivatives, bees wax, alkyl esters based on glycerol, sugars e.g. erythritol, alkyl esters of alkylols or alkyl acids, e.g. citric acid, adipic acid, sebacic acid, alkyl esters of acids containing phosphorous or sulphur, plasticizers, flame retardant, stabilizers, lubricants, ionic liquids, rheology influencing additives and components from reactive systems.

"Drippings" as used herein are fats and oils from vegetable or animal sources that may for example be commercially available for cooking and/or frying purposes. Vegetable fats that may be used as low viscosity carrier in the process disclosed herein may in particular comprise or consist of cocoa butter, coconut oil, palm kernel oil and palm oil, colza oil, sunflower oil, soy bean oil, linseed oil, and margarine. Preferably, vegetable fats according to the present disclosure are hardened, i.e. hydrogenated in order to remove double bonds, and selected from hardened coconut and palm oil. Surprisingly it was shown that hardened coconut and palm oil show very good results in terms of dispersion of the filler material, i.e. CNTs, in the thermoplastic polymer melt.

Plasticizers according to the present disclosure are additives that increase the plasticity or fluidity of a given material. Examples of plasitcizers that may be used as low viscosity carrier in the process of the present disclosure are esters of carboxylic acids, citrates, e.g. trioctyl citrate or acetyl trihexyl citrate, maleates e.g. dibutyl maleate, sebacates e.g. dibutyl sebacate, adipates e.g. dioctyladipate and organophosphates, e.g. tributylphosphate or polyol/ polyesters e.g. triethylene glycol dihexanoate. These plasticizers have the advantage that they do not necessarily have to be completely removed from the process because - besides acting as dispersing agent - they may provide desired properties to the end product as well. Particularly polyols show good results.

Stabilizers for polymers according to the present disclosure are all kinds of substances that can protect polymers from deleterious effects such as oxidation, chain scission and uncontrolled recombinations and cross-linking reactions. Examples for stabilizers of polymers include hindered amine light stabilizers (HALS), UV-absorber, antioxdants and antiozonants. Further examples of eligible stabilizers for the process of the present disclosure are epoxidized soy beanoil, diimides and thioesters. Preferably stabilizers according to the present disclosure are selected from amide, e.g. 1,3,5-Triazine-2,4,6-triamine, N,N'''-[1,2-ethanediyl-bis[[[4,6-bis-[butyl(1,2,2,6,6-pentamethyl-4-piperidinyl) amino]-1,3,5-triaszine-2-yl]imino]-3,1-propanediyl]] bis[N',N"-dibutyl-N',N"-bis(1,2,2,6,6-pentamethyl-4-piperidinyl)-, thioesters, e.g. Dilauryl thiodipropionate , Dimyristyl thiodipropionate, Distearyl thiodipropionate, Pentaerythrityl tetrakis(3-laurylthiopropionate), Ditridecyl thiodipropionate, hindred amines e.g. 1,3,5-Triazine-2,4,6-triamine, N,N'''-[1,2-ethanediyl-bis[[[4,6-bis-[butyl(1,2,2,6,6-pentamethyl-4-piperidinyl) amino]-1,3,5-triaszine-2-yl]imino]-3,1-prapanediyl]] bis[N',N"-dibutyl-N',N"-bis(1,2,2,6,6-pentamethyl-4-piperidinyl)-, Decanedioic acid, bis(2,2,6,6-tetramethyl-1-(octyloxy)-4-piperidinyl)ester, reaction products with 1,1-dimethylethylhydroperoxide and octane, Bis(1,2,2,6,6-pentamethyl-4-piperidinyl) sebacate, Bis(2,2,6,6-tetramethyl-4-piperidinyl) sebacate and metal soaps of Ca, Ba, Mg or Zn such as calcium stearate, barium stearate, magnesium stearate or zinc stearate.

Examples of components of reactive systems include epoxy-functionalized or containing compounds, hardeners based on amines or carboxylic acid, unsaturated polyesters, isocyanates, amines and alcohols and silicones.

The best-suited process temperature in the extrusion system depends on the type of polymer used. Furthermore the temperature has to be set in a manner that the low viscosity carrier is in a liquid state. According to a preferred embodiment, the average process temperature in the extruder is 180 °C or lower. More preferably the average process temperature in the extruder is 150 °C or lower, in particular, 130 °C or lower.

The extrusion system used in the process according to the present disclosure contains at least one extruder. Extruders used in the process may be buss kneaders, single-screw, twin-screw or ring extruders. The extruder(s) that can be used in the process according to the present disclosure may be commercially available ones. However, for the purpose disclosed herein the extruders may also be modified. For the preparation of the carrier masterbatch the extruder is preferably a twin-screw extruder and used without a die plate in the outlet region. In contrast, a die plate is preferably used for extruding the final polymer-CNT composite material.

The length to diameter (L/D) ratio of the extruder is preferably at least 10, more preferably more than 15 and especially more than 25. The L/D ratio is the ratio of the screw length to screw diameter of the extruder.

In one embodiment of the present disclosure the weight percentage of CNTs based on the total weight of the composition, i.e. the carrier master batch, is in the range of 15 wt.-% to 70 wt.-%. With weight percentage above 70 wt.-% of CNTs in the carrier master batch, no adequate dispersion of the CNTs in the polymer-CNT composite, which can be obtained in a second step, is achieved. The reason may be that there is not enough low-viscosity carrier to wet and/or enhance the dispersion of the CNTs in the thermoplastic polymer or reactive resin. In case the weight percentage of CNTs is below 15 wt.-%, the viscosity of the CNT/carrier mixture is not high enough in order to give a proper disentanglement of the CNT agglomerates during the extrusion process. Preferably, the weight percentage is in the range from 20 wt.-% to 60 wt.-%, in particular in the range from 35 wt.-% to 50 wt.-%. The range between 35 wt.-% and 50 wt.-% showed the best compromise between dispersion of CNT and amount of low viscosity carrier required for the process.

According to a particular embodiment of the present disclosure, the carrier masterbatch consists of CNTs and low viscosity carrier, and, optionally, a thermoplastic polymer and/or reactive resin.

In a further embodiment of the present disclosure, the low viscosity carrier can also be a mixture (dispersion, solution) containing a polymer, preferably a thermoplastic polymer and/or a reactive resin or any other material with a viscosity at extrusion conditions of over 30 Pas and a solvent. In that case, step a) the low viscosity carrier is mixed with a polymer, preferably a thermoplastic polymer and/or reactive resin, before addition to the extruder for compounding with the CNTs to form the intermediate (solution, dispersion) for the preparation of polymer-CNTs composites. Then, this mixture is extruded together with the CNT in the extruder. In this case the composition prepared by the process according to the present disclosure, i.e. the carrier masterbatch contains additionally a thermoplastic polymer and/or reactive resin. Afterwards, step b) the solvent is removed by any method known to the skilled person especially but not limited by heating or vacuum treatment and finally step c) mixing the (dried) masterbatch with a thermoplastic polymer or reactive resin in the extruder to give the desired final CNT concentration. Preferably, the thermoplastic polymer in the masterbatch is similar or identical to the polymer, in case of polymer blends at least with one of the polymers in the blend, with which the carrier masterbatch is mixed and extruded to form the polymer-CNT composite. For mixing the thermoplastic polymer and/or reactive resin and the low-viscosity carrier, any method known to the skilled person may be applied, in particular mixing processes such as mixing in the rotor-stator-system, kneader or extruder. The method is particularly useful to produce masterbatches that have high CNT concentrations of e.g. more than 50 wt.-%, preferably more than 70 wt.-% and in particular more than 85 wt.-% after removing the solvent.

Preferably, the mixing of the thermoplastic polymer and/or reactive resin and the low-viscosity carrier comprises the following steps: a) adding a low viscosity carrier or solvent with a melt viscosity below 30 Pas, preferably below 10 Pas, to a mixing system; b) adding and dissolving or dispersing a thermoplastic polymer, reactive resin and/or additive in said low viscosity carrier or solvent c) adding the CNT agglomerates and conveying the whole mixture through the extrusion system, whereby the components are compounded; and d) collecting the compounded of CNT, thermoplastic polymer and/or reactive resin, optionally additive and low viscosity carrier (solvent) mixture from the extrusion system. Preferably, mixing of the thermoplastic polymer and/or reactive resin and the low-viscosity carrier may in addition comprise the following step if appropriate: e) removing the solvent by heating or vacuum treatment from the aforementioned mixture. The mixing process with the extruder provided adequate mixing results.

The process according to the present disclosure has the advantage that it requires only very short extrusion times, such as for example less than one minute. It was found that such short extrusion times lead to sufficient mixing if the application of energy in the extruder is high enough. The energy input is defined as energy used for compounding per kilogram extrudate. Preferably, the application of energy for compounding the CNTs is at least 0.25 kWh/kg. More preferably the application of energy is at least 0.30 kWh/kg, in particular the application of energy is at least 0.40 kWh/kg.

With the process of the present disclosure, high filling ratios of the CNTs in the dried carrier master batch can be achieved. Filling ratios of up to 85 wt.-% of CNT are possible. Preferably, the CNTs in the carrier masterbatch have a filling ratio with solvent based low viscosity carrier of at least 20 wt.-%. More preferably, the filling ratio is at least 30 wt.-%, in particular at least 40 wt.-%.

When compounding the carrier masterbatch according to the present disclosure with a thermoplastic polymer and/or reactive resin, a high degree of dispersion of CNTs in the polymer composite material is achieved providing the composite material with enhanced mechanical and conductive properties. A measure for the dispersion is the agglomerate size of the CNTs in the composite material, determined by light microscopy or electron microscopy. In the composite material according to the present disclosure, the average CNT agglomerate size of remaining agglomerates is preferably below 5 $\mu$m.

Moreover, with the carrier masterbatch according to the present disclosure only short extrusion times, in particular below 10 min, are necessary for providing a sufficient distribution of the CNTs in the polymer-CNT composite material, making the preparation process more efficient. Preferably the extrusion time of carrier masterbatch and thermoplastic polymer and/or reactive resin is below 4 min, more preferably below 2 min.

In addition, with the carrier masterbatch according to the present disclosure carbon nanotubes can also be dispersed in thermoplastics and/or reactive resins with narrow processing window that require rather mild conditions in the extrusion process due to easy decomposition by mechanical shear forces or thermal break down.

In a preferred embodiment of the present disclosure the polymer-CNT composite material contains the thermoplastic polymer polyoxymethylen POM or polyamide PA and the low viscosity carrier PEG. The preferred ratio of POM or PA and PEG is in the range from 90:10 to 99.5:0.5 by weight.

BRIEF DESCRIPTION OF THE DRAWINGS

Further features and advantages of the present disclosure will emerge from the following detailed description of some of its embodiments shown by way of non-limiting examples in the accompanying drawings, in which:

Fig. 1a-b     show microscopy images of microtomes of polymer-CNT composites with 3 wt.-% CNT prepared according to Example 1 (Fig. 1a) and according to comparative Example 1 (Fig.1b);

Fig. 2a-b     show microscopy images of microtomes of polymer-CNT composites with 3 wt.-% CNT prepared according to Example 2 (Fig. 2a) and according to comparative Example 2 (Fig. 2b); and

Fig. 3a-b     show microscopy images of microtomes of polymer-CNT composites with 3 wt.-% CNT prepared according to Example 3 (Fig. 3a) and comparative Example 3 (Fig. 3b).

EXAMPLES

**Example 1**

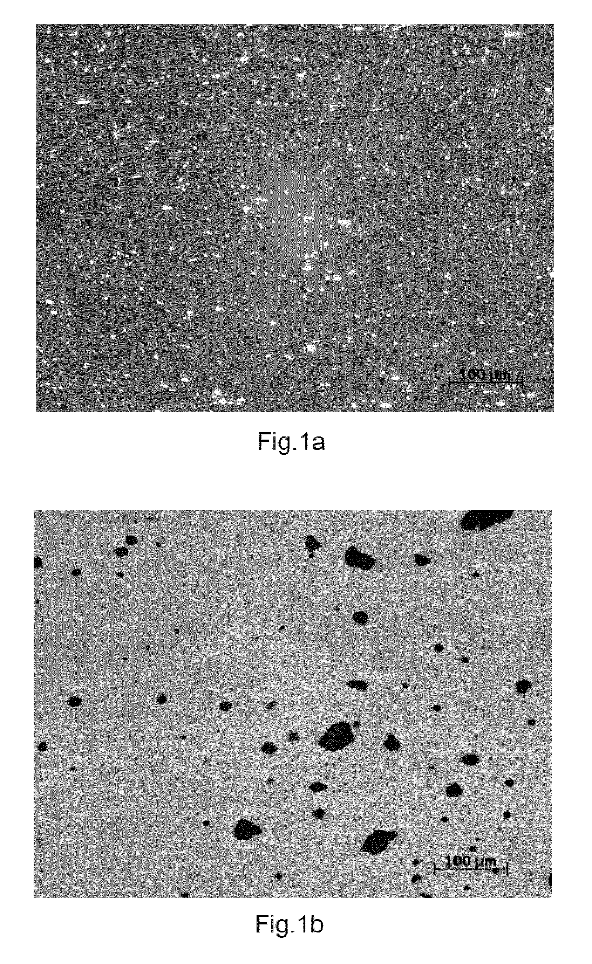

A composition consisting of polyethylene glycol PEG 6000 and CNTs (Baytubes® C 150 P) was processed on a ZSK-26 Megacompounder (Coperion) with a length to diameter ratio (L/D) of 37 (see Figure 1). The extruder consisted of four zones in total and contained a main feed inlet within the 1 st extrusion zone and a side feeder inlet within the fourth zone. The die plate of the tenth zone was removed for this process. The rotation speed was set to 400 rpm.

PEG 6000 was fed to the extruder into the main feed inlet. Baytubes® C 150 P in a weight ratio of 40 % were also fed to the main feed inlet using a separate dosing system. The compounding occurred with a process temperature of 80 °C and an energy application of 0.28 kWh/kg and a residence time of 55 s. The extruded carrier masterbatch of Baytubes® C 150 P and PEG 6000 had a crumbs-like appearance and was collected in aluminum trays and allowed to air cool.

The die plate, allowing an extrusion of up to four strands, was added back in the tenth zone of the extruder. PA6 was dried before compounding for 6 h at a temperature of 80 °C. Dried polyamide (PA)6 (type Durethan B 29 of Lanxess Deutschland GmbH) was fed into the main feed inlet of the extruder. The composition of PEG 6000 and Baytubes® C 150 P previously prepared as described above was also fed into the main inlet of the extruder using a separate dosing system. The ratio of PA6 to the PEG/Baytubes® C 150 P composition was adjusted according to the desired CNT concentration in the final composite. The overall throughput was 25 kg/h composite. The rotation speed was set to 400 rpm. The extruded polymer strands were cooled using a water bath and granulated.

**Comparative Example 1**

A composite material of PA6 (Durethan B29) and Baytubes® C 150 P was also processed on a ZSK-26 Megacompounder (Coperion) with a length to diameter ratio (L/D) of 37. The extruder consisted of four zones in total and contained a main feed inlet within the 1 st extrusion zone and a side feeder inlet within the fourth zone. The die plate in the tenth zone allows an extrusion of up to four strands. The rotation was set to 400 rpm.

PA6 was dried before compounding for 6 h at a temperature of 80 °C. Dried PA6 was fed into the main feed inlet of the extruder. Baytubes® C 150 P were also fed into the main inlet of the extruder using a separate dosing system. The ratio of PA6 to Baytubes® C 150 P was adjusted according to the desired CNT concentration in the final composite. The overall throughput was 25 kg/h polymer composite. The extruded polymer strands were cooled using a water bath and granulated

**Example 2**

In Example 2 a polymer-CNT composite material was produced using the general procedure as described in Example 1 with the difference that POM (Hostaform® of manufacturer Ticona) was used instead of PA6 and the rotation speed was 300 rpm. Accordingly, the drying parameters were adjusted to 100 °C and 3 h.

**Comparative example 2**

In Comparative Example 2 a polymer-CNT composite material was produced using the same general procedure as described in Comparative Example 1 with the difference that POM (Hostaform®; manufacturer: Ticona) was used instead of PA6 and the rotation speed was 300 rpm. Accordingly, the drying parameters were adjusted to 100 °C and 3 h.

**Example 3**

In Example 3 a polymer-CNT composite material was produced using the general procedure as described in Example 1 with the difference that PA12 (GRILAMID®) was used instead of PA6. Accordingly, the drying parameters were adjusted to 80 °C and 6 h.

**Comparative example 3**

In Comparative Example 3 a polymer-CNT composite material was produced using the same general procedure as described in Comparative Example 1 with the difference that PA12 (GRILAMID®; manufacturer: EMS-Grivory) was used instead of PA6. Accordingly, the drying parameters were adjusted to 80 °C and 6 h.

**Quality Assessment of Examples 1 - 3 and Comparative Examples 1 - 3**

a)

From the compounded materials, the product quality was assessed through manufacturing of pressed plates and injection molded plates for surface electrical resistivity (henceforth to be referred to simply as resistivity) measurements, and light microscopy photo analysis.

A small amount (roughly 80 g) of sample from each experiment was saved for manufacturing pressed plates. The samples were pre-dried based on the same criteria as the pure polymer. A heated press (Polystat 400S from the company Schwabenthan) was used to form the samples into pressed plates with a round shape (80 mm diameter, 2 mm thick). The parameters of the pressing process were temperature of 300 °C for PA6 and PA12, and 200 °C for POM trials. Holding time was about 1 min. in all experiments. The plate was subsequently removed from the press and cooled before being removed from the form. The pressed plates were painted with silver paint (two parallel stripes forming a square), placed in a dryer, and after cooling to room temperature the two-point surface resistivity was measured.

b)

Injection molded plates were manufactured using an injection moulding machine Arburg Injection Moulding Machine Allrounder 370 S 800-150; clamping forces 800 kN. The parameters for PA6 and PA12 experiments (examples and comparative examples 1 and 3) were injection speed 10 mm/s, tool temperature 90 °C and mould temperature 310°C. The parameters for the POM experiments (examples and comparative examples 2) were: injection speed 40 mm/s, tool temperature 90 °C and mould temperature 200°C. The manufactured plates were discs of 80 mm diameter and 3 mm thickness (side gate). The surface resistivity was measured according to ASTM-257 using a ring electrode measurement device (Monroe Model 272A) that was placed directly onto the plates. The results are shown in Table 1.

c)

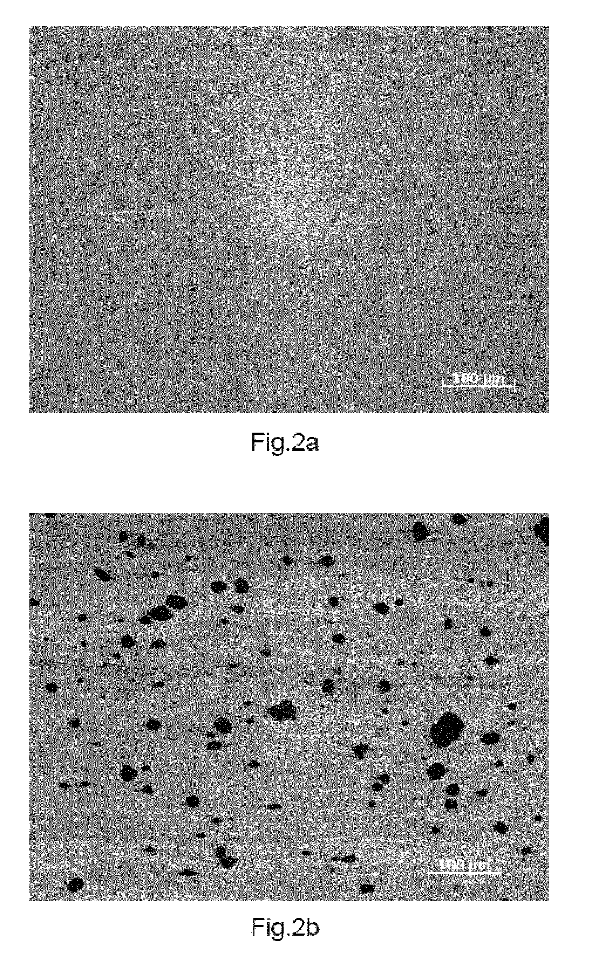

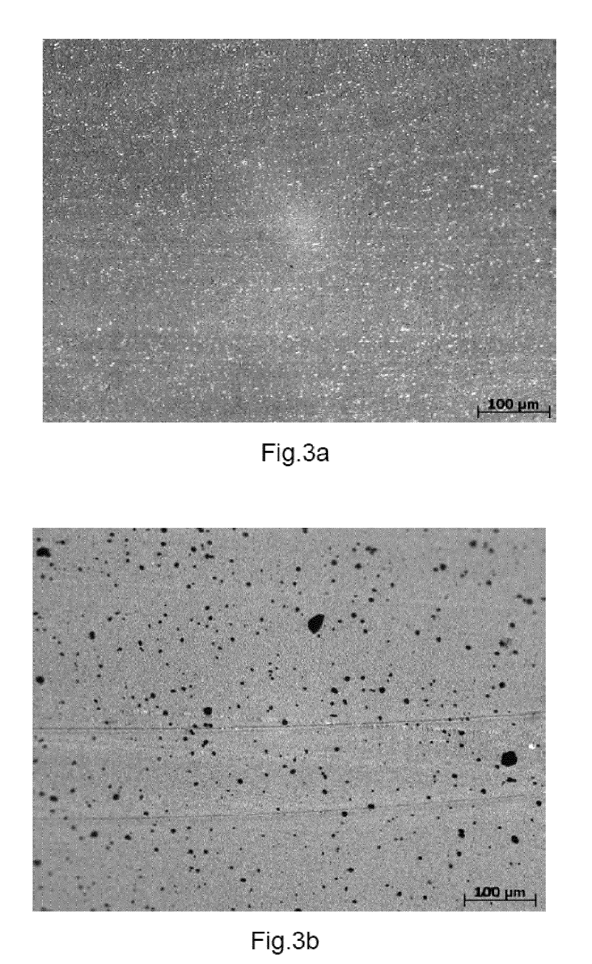

Table 1 also contains values of the dispersion quality. To quantify this parameter a thin layer sample was prepared using a microtome and photographed under a microscope. Microscopy images are shown in Figs. 1a to 3a for the Examples 1 to 3 and in Figs. 1b to 3b for the Comparative Examples 1 to 3.

The resulting image was analyzed electronically with the freeware program ImageJ. With this program, the area fraction in microscopy photos composed of agglomerates ($A_{AGG}$) was evaluated. Taking a unit depth of 1, the volume fraction was calculated ($V_{AGG}$). The mass fraction consisting of non-dispersed CNT ($X_{AGG}$) was calculated using the assumed density of agglomerates ($\rho_{AGG}$) and the density of the pure polymer ($\rho_{POLY}$). The mass fraction of effectively dispersed CNT ($X_{EFF}$) was calculated using the CNT fill fraction ($X_{TOT}$) and non-dispersed CNT fraction ($X_{AGG}$). The percentage dispersed was then simply taken as the effectively dispersed CNT ($X_{EFF}$) divided by the total CNT fill fraction ($X_{TOT}$).

The according formulas are presented in the following:

$$V_{AGG} = A_{AGG} \cdot 1$$

$$X_{AGG} = \frac{\left(V_{AGG} \cdot \rho_{AGG}\right)}{\left(V_{AGG} \cdot \rho_{AGG}\right) + \left(1 - V_{AGG}\right) \cdot \rho_{POLY}}$$

$$X_{EFF} = X_{TOT} - X_{AGG}$$

$$Dispersed = \frac{X_{EFF}}{X_{TOT}}$$

d)

The Elasticity Modulus, Tensile Strength (SB), Yield Stress (SST), Stress at Rupture (SR), Elongation at Yield (DST), and Elongation at Break (DR) were measured according to ISO 527. Impact testing was carried out as delineated in ASTM D256A. The results are also given in Table 1.

**Table 1: Quality assessment results of the Examples**

| Polymer | Carrier | CNT [wt.%] | Energy input [kWh/kg] | Dispersion [%] | Emodulus [N/mm²] | SST [N/mm²] | DST [%] | SB [N/mm²] | SR [N/mm²] | DR [%] | Resistance [Ohm] |
|---|---|---|---|---|---|---|---|---|---|---|---|
| PA6 | - | 3 | 0.25 | 58 | 3427 | 0 | 0 | 89.8 | 89.7 | 3.5 | $4 \cdot 10^4$ |
| PA6 | PEG | 3 | 0.21 | 90+ | 2598 | 63.4 | 3.6 | 60.9 | 54.8 | 109 | 750 |
| PA6 | - | 5 | 0.25 | 59 | 3590 | 0 | 0 | 90.9 | 90.5 | 3.1 | 120 |
| PA6 | PEG | 5 | 0.2 | 90+ | 2699 | 60.6 | 3.3 | 60.6 | 55.4 | 45.3 | 86 |
| POM | - | 3 | 0.16 | 51 | 3526 | 74.5 | 6.2 | 69.9 | 69.8 | 4.8 | 45 |
| POM | PEG | 3 | 0.12 | 98 | 2841 | 57.5 | 10.3 | 57.5 | 52.5 | 41 | 116 |
| POM | - | 4 | 0.15 | 42 | 3626 | 0 | 0 | 69.6 | 69.3 | 3.3 | 25 |
| POM | PEG | 4 | 0.13 | 98 | 2756 | 52.6 | 11 | 52.8 | 48.5 | 49.8 | 61 |
| PA12 | - | 3 | 0.25 | 64 | 2252 | 0 | 0 | 60.5 | 60.5 | 4 | 340 |
| PA12 | PEG | 3 | 0.18 | 97 | 2151 | 67.7 | 5.7 | 67.7 | 59.5 | 11 | 510 |
| PA12 | - | 5 | 0.26 | 67 | 2374 | 0 | 0 | 65.1 | 65.1 | 3.4 | 30 |
| PA12 | PEG | 5 | 0.14 | 94 | 2198 | 0 | 0 | 26 | 25.9 | 1.3 | 69 |

**Claims**

1. Process for the preparation of a composition containing carbon nanotubes (CNTs) and a low viscosity carrier in an extrusion system, comprising the steps of:

    a) adding a low viscosity carrier with a melt viscosity below 30 Pas to the extrusion system;
    b) adding CNTs with an average agglomerate size in the range from 0.02 mm to 6 mm to the extrusion system;
    c) conveying the CNTs and the low viscosity carrier through the extrusion system for a time of from 10 s to 90 s, whereby the components are compounded; and
    d) collecting the composition of low viscosity carrier and CNTs from the extrusion system,
    wherein the low viscosity carrier comprises less than 10 wt.-% of aromatic compounds, preferably less than 1 wt.-% of aromatic compounds.

2. Process according to claim 1, **characterized in that** the weight percentage of CNTs based on the total weight of the composition is in the range of from 25 wt.-% to 70 wt.-%, preferably the weight percentage is in the range of from 30 wt.-% to 70 wt-%, in particular in the range of from 40 wt.-% to 60 wt.-%.

3. Process according to claim 1 or 2, **characterized in that** the low viscosity carrier of step a) is in a mixture with a thermoplastic polymer and/or a reactive resin.

4. Process according to claim 3, in which the mixture of the thermoplastic polymer and/or the reactive resin and the low-viscosity carrier optionally comprises a filler and is obtained by a process comprising the following steps:

    a) adding a low viscosity carrier with a melt viscosity below 30 Pas and optionally a filler to an extrusion system;
    b) adding a thermoplastic polymer and/or a reactive resin to the extrusion system;
    c) conveying the thermoplastic polymer and/or reactive resin, optionally the filler and the low viscosity carrier through the extrusion system, whereby the components are compounded; and
    d) collecting the compounded thermoplastic polymer and/or reactive resin, optionally filler and low viscosity carrier from the extrusion system.

5. Process according to claim 4, **characterized in that** the weight percentage of CNTs based on the total weight of the composition is in the range of 0.01 wt.-% to 25 wt.-%, preferably the weight percentage is in the range from 0.1 wt.-% to 15 wt-%, in particular in the range from 0.8 wt.-% to 8 wt.-%.

6. Process according to any of claims 1 to 5, **characterized in that** the application of energy for compounding the CNTs and the carrier is at least 0.25 KWh/kg.

7. Composition containing carbon nanotubes (CNTs), a low viscosity carrier and optionally a thermoplastic polymer and/or a reactive resin, obtainable by a preparation process according to any of claims 1 to 6.

8. Composition according to claim 7, **characterized by** a filling ratio of the CNTs with low viscosity carrier of at least 20 wt.-%.

9. Process for the preparation of a polymer-CNT composite material in an extrusion system, comprising the steps of:

    a) adding a thermoplastic polymer and/or a reactive resin to an extrusion system;
    b) adding a composition according to claim 7 or 8 to the extrusion system and contacting the composition with the thermoplastic polymer and/or the reactive resin;
    c) conveying and compounding the components in the extrusion system;
    d) collecting the composite material containing the thermoplastic polymer and/or reactive resin, the low viscosity carrier and the CNTs.

10. Process according to claim 9, **characterized in that** the thermoplastic polymer and/or reactive resin in the composition according to claim 7 or 8 is identical to the thermoplastic polymer and/or reactive resin to which the composition is added.

11. Process according to claim 10, **characterized in that** the extrusion time is below 10 min, preferably below 4 min, in particular below 2 min.

**12.** Polymer-CNT composite material, obtainable by a preparation process according to any claims 9 to 11.

**13.** Polymer-CNT composite material according to claim 12, **characterized in that** the average CNT agglomerate size is below 5 μm.

**14.** Polymer-CNT composite material according to claim 13, **characterized in that** the thermoplastic polymer is PA6, POM, PA12, UHMWPE (Ultra-high-molecular-weight polyethylene) or a mixture thereof and the low viscosity carrier is PEG, alkyl esters or ethers, low molecular polyolefin, wax, and non-aromatic compound with molecular weight of equal or less 6000 g/mol, or a mixture thereof, preferably in a ratio in the range of from 90:10 to 99.9:0.1 by weight.

**15.** Use of a composition according to claim 7 or 8 for the preparation of a polymer-CNT composite material.

Fig.1a

Fig.1b

Fig.2a

Fig.2b

Fig.3a

Fig.3b

Europäisches
Patentamt
European
Patent Office
Office européen
des brevets

# EUROPEAN SEARCH REPORT

Application Number

EP 13 17 1074

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2012/241686 A1 (BASTIAENS JOS [BE] ET AL) 27 September 2012 (2012-09-27) | 1-9,11, 12,14,15 | INV. C08J3/22 |
| Y | * claims 1,2,11,26,27 * <br> * page 3, paragraph [0022] * | 1-15 | |
| X | US 2010/264376 A1 (KORZHENKO ALEXANDER [FR] ET AL) 21 October 2010 (2010-10-21) <br> * claims 1,3 * <br> * page 2, paragraph [0026] * | 1-3,6-8, 15 | |
| X | US 2012/277125 A1 (KORZHENKO ALEXANDER [FR] ET AL) 1 November 2012 (2012-11-01) <br> * claims 1,3,6 * | 1,2 | |
| X | JP 2013 023579 A (TOSOH CORP) 4 February 2013 (2013-02-04) <br> * abstract * | 1-3,7 | |
| Y,D | WO 2012/031989 A1 (BAYER MATERIALSCIENCE AG [DE]; HOCKE HEIKO [DE]; VITOVSKY JOHN [US]) 15 March 2012 (2012-03-15) <br> * claims 1,3, 5, 10,12 * | 1-15 | TECHNICAL FIELDS SEARCHED (IPC) <br><br> C08J |

The present search report has been drawn up for all claims

| Place of search | Date of completion of the search | Examiner |
|---|---|---|
| The Hague | 6 November 2013 | Niaounakis, Michael |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**  EP 13 17 1074

This annex lists the patent family members relating to the patent documents cited in the above-mentioned European search report.
The members are as contained in the European Patent Office EDP file on
The European Patent Office is in no way liable for these particulars which are merely given for the purpose of information.

06-11-2013

| Patent document cited in search report | Publication date | Patent family member(s) | Publication date |
|---|---|---|---|
| US 2012241686 A1 | 27-09-2012 | US 2012241686 A1<br>WO 2012127357 A1 | 27-09-2012<br>27-09-2012 |
| US 2010264376 A1 | 21-10-2010 | CN 102361929 A<br>EP 2236556 A1<br>FR 2943349 A1<br>JP 2010222582 A<br>KR 20110118831 A<br>US 2010264376 A1<br>WO 2010109118 A1 | 22-02-2012<br>06-10-2010<br>24-09-2010<br>07-10-2010<br>01-11-2011<br>21-10-2010<br>30-09-2010 |
| US 2012277125 A1 | 01-11-2012 | CN 102575021 A<br>EP 2480595 A1<br>FR 2950628 A1<br>JP 2013506025 A<br>KR 20120104524 A<br>RU 2012116507 A<br>US 2012277125 A1<br>WO 2011036411 A1 | 11-07-2012<br>01-08-2012<br>01-04-2011<br>21-02-2013<br>21-09-2012<br>27-10-2013<br>01-11-2012<br>31-03-2011 |
| JP 2013023579 A | 04-02-2013 | NONE | |
| WO 2012031989 A1 | 15-03-2012 | CN 103201321 A<br>EP 2426163 A1<br>EP 2614109 A1<br>JP 2013536893 A<br>TW 201226166 A<br>US 2013203928 A1<br>WO 2012031989 A1 | 10-07-2013<br>07-03-2012<br>17-07-2013<br>26-09-2013<br>01-07-2012<br>08-08-2013<br>15-03-2012 |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20090023851 A1
- WO 2012031989 A1
- US 7285591 B2
- WO 2008106572 A1
- WO 2009001324 A9
- US 5747161 A
- WO 8603455 A
- DE 102007044031 A1
- EP 198558 A
- US 7018601 B2
- US 6294144 B1
- EP 2010004845 W
- US 6232706 B
- US 7744793 B2

### Non-patent literature cited in the description

- **ZHOU.** *Express Polym. Lett.,* 2008, vol. 2 (1), 40-48
- *Annu. Rev. Public Health,* 2010, vol. 31, 179-94
- *Carbon,* 1996, vol. 34, 1301-3
- *Science,* 1994, vol. 263, 1744-7
- **MILNE et al.** Encyclopedia of Nanoscience and Nanotechnology. 2003, vol. X, 1-22